# EUROPEAN PATENT APPLICATION

(11) **EP 4 614 305 A1**
(43) Date of publication of application: **10.09.2025**
(21) Application number: 23889140.2
(22) Date of filing: 08.11.2023
(51) Int. Cl.: G06F 3/14, G06F 3/0484, G06F 3/0481, G06Q 50/10, G06K 19/06

(54) **ELECTRONIC DEVICE FOR SHARING SCREEN SETTINGS, AND CONTROL METHOD THEREFOR**

(30) Priority: 08.11.2022 KR 20220147689; 27.12.2022 KR 20220185731
(71) Applicant: Samsung Electronics Co., Ltd., Suwon-si, Gyeonggi-do 16677 (KR)
(72) Inventor: KIM, Heejae, Suwon-si Gyeonggi-do 16677 (KR); KIM, Sangheon, Suwon-si Gyeonggi-do 16677 (KR); KIM, Taekyoung, Suwon-si Gyeonggi-do 16677 (KR); PARK, Youngyun, Suwon-si Gyeonggi-do 16677 (KR); SONG, Yoechan, Suwon-si Gyeonggi-do 16677 (KR); YU, Donghun, Suwon-si Gyeonggi-do 16677 (KR); JUNG, Woocheol, Suwon-si Gyeonggi-do 16677 (KR); JEONG, Hyesoon, Suwon-si Gyeonggi-do 16677 (KR); HAN, Nawoong, Suwon-si Gyeonggi-do 16677 (KR); LIM, Yeunwook, Suwon-si Gyeonggi-do 16677 (KR); CHOE, Sungyul, Suwon-si Gyeonggi-do 16677 (KR)
(74) Representative: Gulde & Partner
(86) International application number: PCT/KR2023/017853
(87) International publication number: WO 2024/101882

(57) **Abstract**

An electronic device is disclosed. The electronic device comprises a display, a memory, a communication module and one processor, wherein the at least one processor displays a plurality of user interfaces corresponding to the settings of a screen being applied to the electronic device on the basis of a plurality of applications stored in the memory, receives a first user input for selecting at least one from among the plurality of user interfaces, acquires respective pieces of settings information about at least one screen corresponding to the selected at least one user interface, acquires a data file in which at least one piece of application information and the acquired settings information about the at least one screen corresponding to the selected at least one user interface are grouped, and can transmit the data file to an external server.

## Description

### [Technical Field]

Various embodiments of the disclosure relate to an electronic device sharing a screen setting and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Further, the electronic device provides various graphic user interfaces (GUIs) for interaction with the user through the display.

### [Detailed Description of the Invention]

### [Technical Solution]

According to an embodiment, an electronic device may comprise a display, memory, a communication module, and at least one processor operatively connected to the display, the memory, and the communication module.

According to an embodiment, the at least one processor may display a plurality of user interfaces corresponding to a screen setting applied to the electronic device based on a plurality of applications stored in the memory.

According to an embodiment, the at least one processor may receive a first user input for selecting at least one user interface among the plurality of user interfaces.

According to an embodiment, the at least one processor may obtain each of pieces of setting information about at least one screen corresponding to the selected at least one user interface.

According to an embodiment, the at least one processor may obtain a data file that groups at least one piece of application information corresponding to the selected at least one user interface and the obtained setting information about the at least one screen.

According to an embodiment, the at least one processor may transmit the data file to an external server.

According to an embodiment, the at least one processor may display at least one image captured for a screen displayed on the display.

According to an embodiment, the at least one processor may display the plurality of user interfaces corresponding to a setting included in an image selected among the at least one image.

According to an embodiment, the at least one processor may display an execution screen of one of the plurality of applications.

According to an embodiment, the at least one processor may display the plurality of user interfaces corresponding to a setting of the execution screen of the one application based on receiving a second user input for sharing a setting of a screen through the execution screen of the one application.

According to an embodiment, the at least one processor may display the plurality of user interfaces corresponding to a setting of a shareable screen based on receiving a third user input for executing an execution screen of a screen sharing application for sharing a setting of a screen.

According to an embodiment, the setting of the screen may include at least one of a background screen, a function, an arrangement, a shape, or a color of at least one object.

According to an embodiment, the setting information about the at least one screen may include at least one of data corresponding to the setting of the screen or a thumbnail image corresponding to the setting of the screen.

According to an embodiment, the screen applied to the electronic device may include at least one of a home screen, a lock screen, a clock screen, a keyboard screen, a multi-window, a navigation bar, a notification screen, a stylus pen-related screen, a background screen, or an application execution screen.

According to an embodiment, the at least one processor may display at least one of a QR code or a URL for sharing the data file on the display after transmitting the data file to the external server.

According to an embodiment, an electronic device may comprise a display, memory, a communication module, and at least one processor operatively connected to the display, the memory, and the communication module.

According to an embodiment, the at least one processor may receive a data file including screen setting information shared from an external server.

According to an embodiment, the at least one processor may display a plurality of user interfaces corresponding to setting information about a plurality of screens included in the data file.

According to an embodiment, the at least one processor may, based on receiving a user input for selecting at least one user interface among the plurality of user interfaces, obtain information about at least one application and setting information about at least one screen, corresponding to the at least one user interface.

According to an embodiment, the at least one processor may modify a setting of at least one screen based on the information about the at least one application and the setting information about the at least one screen.

According to an embodiment, the at least one processor may, based on at least some of the at least one application being not installed on the electronic device, display a message for leading to install at least some of the at least one application.

According to an embodiment, a method for controlling an electronic device may comprise displaying a plurality of user interfaces corresponding to a screen setting applied to the electronic device based on a plurality of applications stored in memory.

According to an embodiment, the method for operating the electronic device may comprise receiving a first user input for selecting at least one user interface among the plurality of user interfaces.

According to an embodiment, the method for operating the electronic device may comprise obtaining each of pieces of setting information about at least one screen corresponding to the selected at least one user interface.

According to an embodiment, the method for operating the electronic device may comprise obtaining a data file that groups at least one piece of application information corresponding to the selected at least one user interface and the obtained setting information about the at least one screen.

According to an embodiment, the method for operating the electronic device may comprise transmitting the data file to an external server.

According to an embodiment, displaying the plurality of user interfaces may display at least one image captured for a screen displayed on a display.

According to an embodiment, displaying the plurality of user interfaces may display the plurality of user interfaces corresponding to a setting included in an image selected among the at least one image.

According to an embodiment, displaying the plurality of user interfaces may display an execution screen of one of the plurality of applications.

According to an embodiment, displaying the plurality of user interfaces may display the plurality of user interfaces corresponding to a setting of the execution screen of the one application based on receiving a second user input for sharing a setting of a screen through the execution screen of the one application.

According to an embodiment, displaying the plurality of user interfaces may display the plurality of user interfaces corresponding to a setting of a shareable screen based on receiving a third user input for executing an execution screen of a screen sharing application for sharing a setting of a screen.

According to an embodiment, the setting of the screen may include at least one of a background screen, a function, an arrangement, a shape, or a color of at least one object.

According to an embodiment, the setting information about the at least one screen may include at least one of data corresponding to the setting of the screen or a thumbnail image corresponding to the setting of the screen.

According to an embodiment, the screen applied to the electronic device may include at least one of a home screen, a lock screen, a clock screen, a keyboard screen, a multi-window, a navigation bar, a notification screen, a stylus pen-related screen, a background screen, or an application execution screen.

According to an embodiment, the method may further comprise displaying at least one of a QR code or a URL for sharing the data file on the display after transmitting the data file to the external server.

According to an embodiment, the method for controlling the electronic device may comprise receiving a data file including screen setting information shared from an external server.

According to an embodiment, the method for controlling the electronic device may comprise displaying a plurality of user interfaces corresponding to setting information about a plurality of screens included in the data file.

According to an embodiment, the method for controlling the electronic device may comprise, based on receiving a user input for selecting at least one user interface among the plurality of user interfaces, obtaining information about at least one application and setting information about at least one screen, corresponding to the at least one user interface.

According to an embodiment, the method for controlling the electronic device may comprise changing a setting of at least one screen based on the information about the at least one application and the setting information about the at least one screen.

According to an embodiment, the method for controlling the electronic device may further comprise, based on at least some of the at least one application being not installed on the electronic device, displaying a message for leading to install at least some of the at least one application.

According to an embodiment, in a non-transitory computer-readable recording medium storing one or more programs, the one or more programs may display a plurality of user interfaces corresponding to a screen setting applied to the electronic device based on a plurality of applications stored in the memory, by the electronic device.

According to an embodiment, the one or more programs may comprise instructions for the electronic device to receive a first user input for selecting at least one user interface among the plurality of user interfaces.

According to an embodiment, the one or more programs may comprise instructions for the electronic device to obtain each of pieces of setting information about at least one screen corresponding to the selected at least one user interface.

According to an embodiment, the one or more programs may comprise instructions for the electronic device to obtain a data file that groups at least one piece of application information corresponding to the selected at least one user interface and the obtained setting information about the at least one screen.

According to an embodiment, the one or more programs may comprise instructions for the electronic device to transmit the data file to an external server.

According to an embodiment, the one or more programs may comprise instructions for the electronic device to display at least one image captured for a screen displayed on the display.

According to an embodiment, the one or more programs may comprise instructions for the electronic device to display the plurality of user interfaces corresponding to a setting included in an image selected among the at least one image.

According to an embodiment, the one or more programs may comprise instructions for the electronic device to display an execution screen of one of the plurality of applications.

According to an embodiment, the one or more programs may comprise instructions for the electronic device to display the plurality of user interfaces corresponding to a setting of the execution screen of the one application based on receiving a second user input for sharing a setting of a screen through the execution screen of the one application.

According to an embodiment, the one or more programs may comprise instructions for the electronic device to display the plurality of user interfaces corresponding to a setting of a shareable screen based on receiving a third user input for executing an execution screen of a screen sharing application for sharing a setting of a screen.

According to an embodiment, the setting of the screen may include at least one of a background screen, a function, an arrangement, a shape, or a color of at least one object.

According to an embodiment, the setting information about the at least one screen may include at least one of data corresponding to the setting of the screen or a thumbnail image corresponding to the setting of the screen.

According to an embodiment, the screen applied to the electronic device may include at least one of a home screen, a lock screen, a clock screen, a keyboard screen, a multi-window, a navigation bar, a notification screen, a stylus pen-related screen, a background screen, or an application execution screen.

According to an embodiment, the one or more programs may comprise instructions for the electronic device to display at least one of a QR code or a URL for sharing the data file on the display after transmitting the data file to the external server.

According to an embodiment, in a non-transitory computer-readable recording medium storing one or more programs, the one or more programs may comprise instructions for an electronic device to receive a data file for sharing a screen setting from an external server.

According to an embodiment, the one or more programs may comprise instructions for the electronic device to display a plurality of user interfaces corresponding to setting information about a plurality of screens included in the data file.

According to an embodiment, the one or more programs may comprise instructions for the electronic device to, based on receiving a user input for selecting at least one user interface among the plurality of user interfaces, obtain information about at least one application and setting information about at least one screen, corresponding to the at least one user interface.

According to an embodiment, the one or more programs may comprise instructions for the electronic device to modify a setting of at least one screen based on the information about the at least one application and the setting information about the at least one screen.

According to an embodiment, the one or more programs may comprise instructions for the electronic device to, based on at least some of the at least one application being not installed on the electronic device, display a message for leading to install at least some of the at least one application.

### [Brief Description of Drawings]

FIG. 1 is a block diagram illustrating an electronic device in a network environment according to an embodiment;
FIG. 2 is a view illustrating a screen setting sharing operation by an electronic device according to an embodiment;
FIG. 3 is a flowchart illustrating a screen setting sharing operation by an electronic device according to an embodiment;
FIG. 4 is a view illustrating an application list for a screen setting of an electronic device according to an embodiment;
FIG. 5 is a view illustrating an operation of selecting a screen setting to be shared according to an embodiment;
FIG. 6 is a view illustrating an operation of selecting a screen setting to be shared according to an embodiment;
FIG. 7 is a view illustrating a screen setting sharing operation by an electronic device according to an embodiment;
FIG. 8A is a view illustrating an operation of obtaining data for screen setting sharing by an electronic device according to an embodiment;
FIG. 8B is a view illustrating data to be shared according to an embodiment;
FIG. 8C is a view illustrating data to be shared according to an embodiment;
FIG. 9 is a view illustrating image data included in shared data according to an embodiment;
FIG. 10 is a view illustrating an application list included in shared data according to an embodiment;
FIG. 11 is a view illustrating a screen setting sharing operation by an electronic device according to an embodiment;
FIG. 12 is a view illustrating an operation of displaying a QR code or a URL for screen setting sharing by an electronic device according to an embodiment;
FIG. 13 is a view illustrating a screen setting sharing scheme by an electronic device according to an embodiment;
FIG. 14 is a flowchart illustrating an operation of receiving sharing of a screen setting by an electronic device according to an embodiment;
FIG. 15 is a flowchart illustrating an operation of applying a shared screen setting by an electronic device according to an embodiment;
FIG. 16 is a view illustrating an operation of applying a shared screen setting by an electronic device according to an embodiment;
FIG. 17 is a view illustrating an application example in which an electronic device where a screen setting is shared is a smart refrigerator according to an embodiment;
FIG. 18 is a view illustrating an application example in which an electronic device where a screen setting is shared is a navigation according to an embodiment;
FIG. 19 is a view illustrating an application example in which an electronic device where a screen setting is shared is a smart TV according to an embodiment;
FIG. 20 is a view illustrating an application example in which an electronic device where a screen setting is shared is a head-mounted device according to an embodiment; and
FIG. 21 is a view illustrating an application example in which an electronic device where a screen setting is shared is a smart watch according to an embodiment.

### [Mode for Carrying out the Invention]

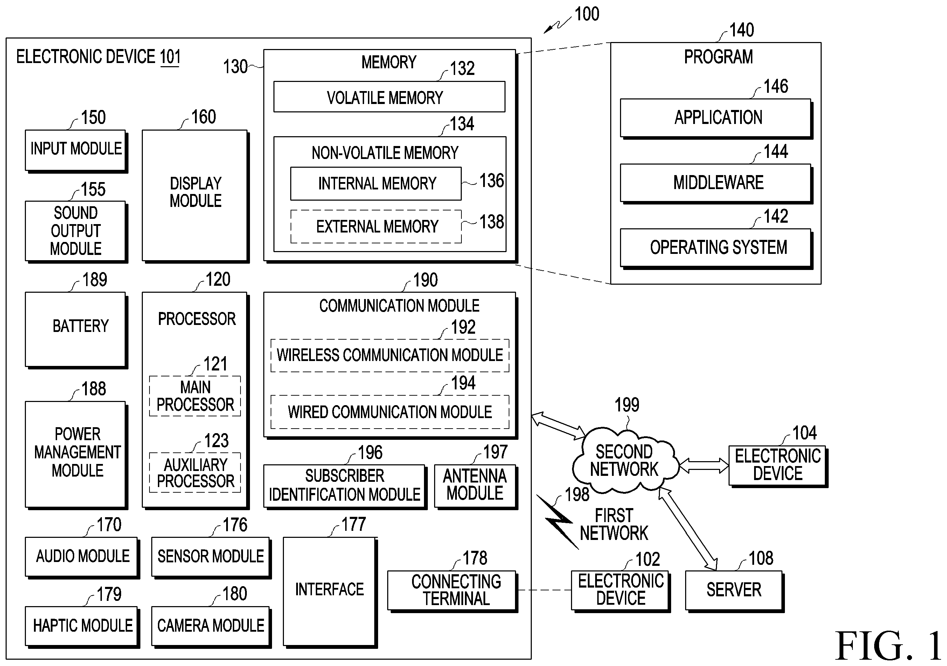

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

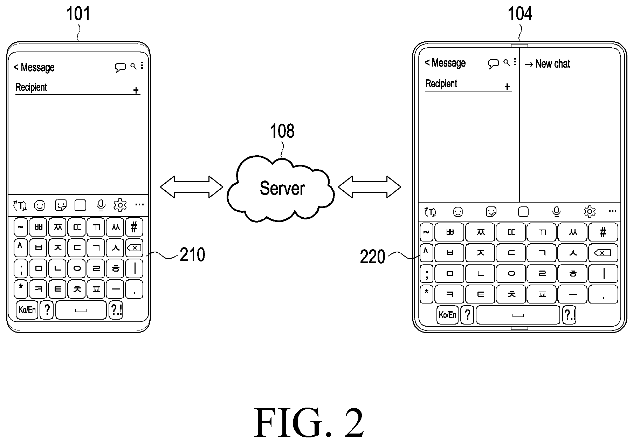

FIG. 2 is a view illustrating a screen setting sharing operation by an electronic device according to an embodiment.

Referring to FIG. 2, the electronic device 101 (e.g., the electronic device 101 of FIG. 1) may customize the setting of the screen based on a user input. According to an embodiment, the electronic device 101 may install at least one application for customizing the screen setting, and may customize the screen setting based on the installed at least one application.

According to an embodiment, the electronic device 101 may customize the settings of at least one of a home screen, a lock screen, a clock screen, a keyboard screen, a multi-window, a navigation bar, a notification screen, a stylus pen-related screen, a background screen, or an execution screen of an application.

According to an embodiment, the customizable screen setting may include at least one of a background screen, a function, arrangement, shape, or color of at least one object.

According to an embodiment, the electronic device 101 may transmit setting information about the customized screen 210 (e.g., a keyboard screen) to the server 108 (e.g., the server 108 of FIG. 1). For example, the customized keyboard screen 210 may be one in which at least one of the color, the shape of a key, the key layout, or the size of a key by a user input.

According to an embodiment, the external electronic device 104 (e.g., the electronic device 104 of FIG. 1) may receive the setting information from the server 108.

According to an embodiment, the external electronic device 104 may set the screen 220 (e.g., a keyboard screen) to be suitable for the display of the external electronic device 104 based on the received setting information.

As such, the external electronic device 104 may set the screen to correspond to the screen setting of the electronic device 101 by sharing the screen setting information transmitted from the electronic device 101.

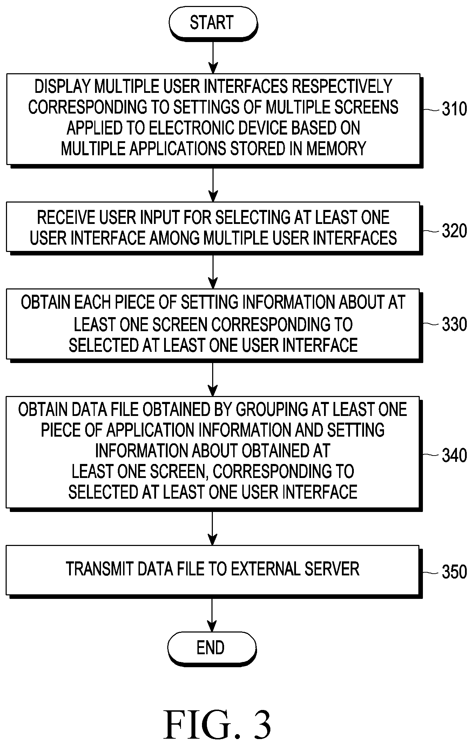

According to an embodiment, an operation of sharing a screen setting is described below in greater detail with reference to FIGS. 3 to 17.

FIG. 3 is a flowchart illustrating a screen setting sharing operation by an electronic device according to an embodiment.

According to an embodiment, in operation 310, the electronic device (e.g., the electronic device 101 of FIG. 1 or the processor 120 of FIG. 1) may display a plurality of user interfaces respectively corresponding to the settings of a plurality of screens applied to the electronic device based on a plurality of applications stored in the memory (e.g., the memory 130 of FIG. 1).

According to an embodiment, the plurality of user interfaces may be displayed through a screen shot image, an execution screen of an application for screen sharing, and/or an execution screen of an application to be shared.

According to an embodiment, the electronic device may display at least one image obtained by capturing (e.g., screen shot) the screen displayed on the display (e.g., the display module 160 of FIG. 1). According to an embodiment, if a user input for starting screen sharing is received on the execution screen of the application for screen sharing, the electronic device may display at least one screen shot image.

According to an embodiment, the at least one image may include at least one screen shot image of a home screen, a lock screen, a clock screen, a keyboard screen, a multi-window, a navigation bar, a notification screen, a stylus pen-related screen, a background screen, or an execution screen of an application.

According to an embodiment, the electronic device may display a plurality of user interfaces corresponding to the settings included in the selected image from among at least one image.

According to an embodiment, the electronic device may obtain setting information included in the image selected from at least one image. For example, if the selected image is a screen shot image of the home screen, the electronic device may obtain setting information such as the background, the arrangement of objects (e.g., application icons, widgets, and/or hotseats), and/or the arrangement (e.g., 5 rows 3 columns or 4 rows 4 columns) of application icons.

According to an embodiment, the electronic device may display a plurality of user interfaces corresponding to the obtained settings. For example, the electronic device may display a plurality of user interfaces corresponding to the setting information, such as the background, the arrangement of objects (e.g., application icons, widgets, and/or hotseats), and/or the arrangement (e.g., 5 rows 3 columns or 4 rows 4 columns) of application icons.

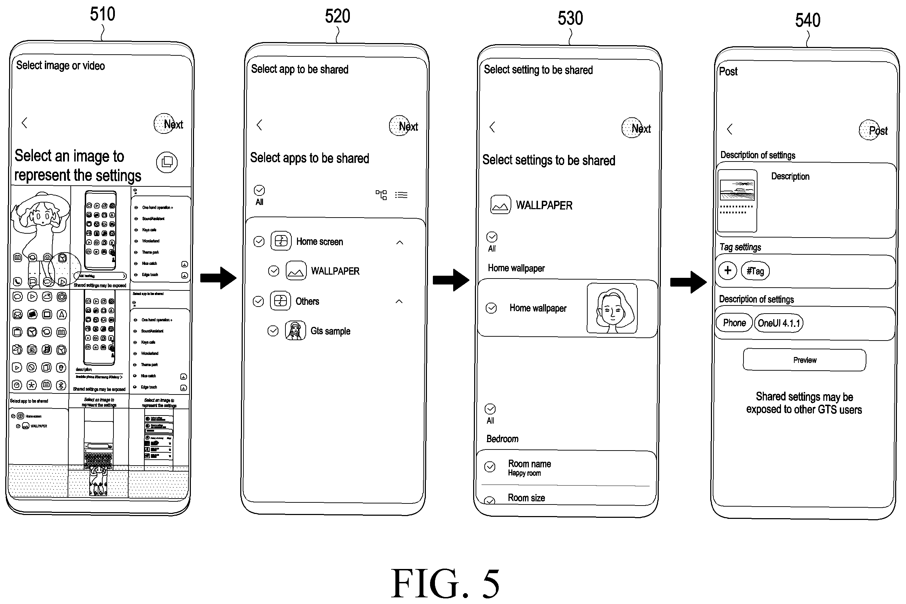

According to an embodiment, an operation of sharing a screen setting using a stored screen shot image is described below with reference to FIG. 5.

Although it has been described above that one image is selected from at least one image already stored, according to an embodiment, the electronic device may obtain a screen setting included in the captured image if a user input for capturing a specific screen (e.g., a home screen, a lock screen, a clock screen, a keyboard screen, a multi-window, a navigation bar, a notification screen, a stylus pen-related screen, a background screen, or an execution screen of an application) and a user input for sharing the screen setting are received.

According to an embodiment, the electronic device may display a plurality of user interfaces respectively corresponding to the obtained screen settings.

According to an embodiment, the electronic device may display an execution screen of one application among a plurality of applications installed in the electronic device, and display a plurality of user interfaces corresponding to the settings of the execution screen of one application based on receiving a user input for sharing the settings of the screen through the execution screen of the one application.

According to an embodiment, if the electronic device receives a user input for sharing the screen setting on the execution screen of an application capable of customizing the screen setting, the electronic device may display at least one user interface corresponding to each of the screen settings provided through the application.

For example, if receiving a user input for sharing the screen settings on the execution screen of the application (e.g., keys cafe) capable of customizing the keyboard screen settings, the electronic device may display at least one user interface related to the keyboard screen.

According to an embodiment, the electronic device may display a plurality of user interfaces corresponding to settings of a shareable screen based on receiving a user input for executing the execution screen of a screen sharing application for sharing the screen setting.

According to an embodiment, the electronic device may display a list including a plurality of user interfaces applied to the electronic device and respectively corresponding to the settings of the shareable screen through the execution screen of the screen sharing application (e.g., Galaxy To Share) for sharing the screen setting.

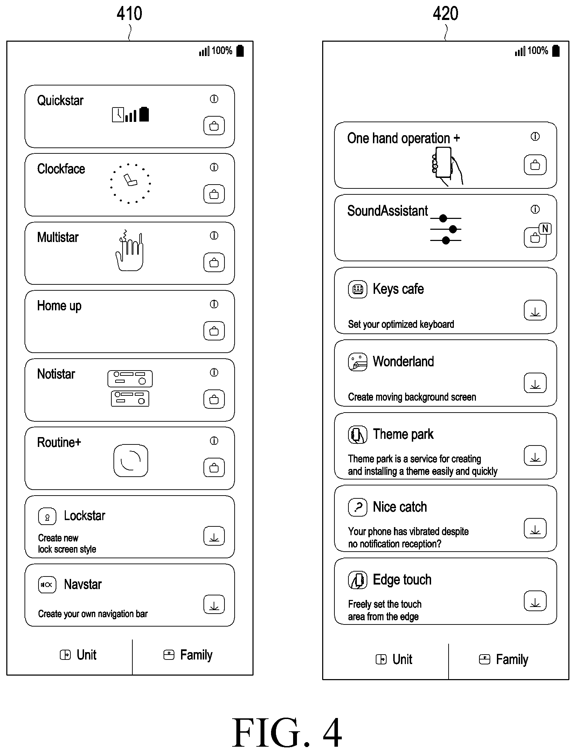

According to an embodiment, an operation of displaying a list of settings of a shareable screen is described below with reference to FIG. 4.

According to an embodiment, the screen applied to the electronic device may include at least one of a home screen, a lock screen, a clock screen, a keyboard screen, a multi-window, a navigation bar, a notification screen, a stylus pen-related screen, a background screen, or an execution screen of an application.

According to an embodiment, the settings of the screen may include at least one of a background screen, a function, arrangement, shape, or color of at least one object.

According to an embodiment, the setting information about the at least one screen may include at least one of data corresponding to the setting of the screen or the thumbnail image corresponding to the setting of the screen. According to an embodiment, the setting information about the at least one screen may include a value of a sensor value change (e.g., hinge angle, folding, and folding) of a form factor, which is a physical attribute of the electronic device.

According to an embodiment, in operation 320, the electronic device may receive a user input for selecting at least one user interface from among a plurality of user interfaces.

According to an embodiment, in operation 330, the electronic device may obtain each of pieces of setting information about at least one screen corresponding to the selected at least one user interface.

According to an embodiment, the electronic device may obtain screen setting information from each application that provides settings of at least one screen corresponding to the selected at least one user interface.

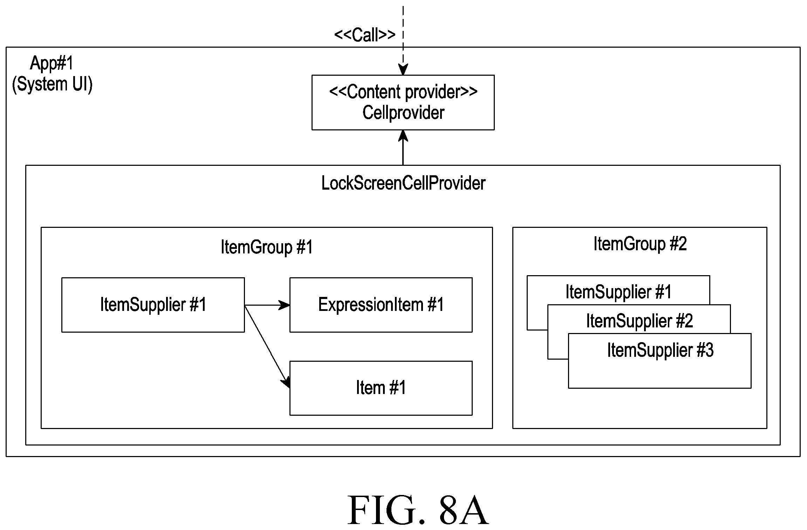

An operation of obtaining setting information about a screen according to an embodiment is described below in greater detail with reference to FIG. 8A.

According to an embodiment, in operation 340, the electronic device may obtain a data file that groups at least one application information corresponding to the selected at least one user interface and the obtained setting information about the at least one screen.

According to an embodiment, the setting information about the at least one screen may include at least one of data corresponding to the setting of the screen or the thumbnail image corresponding to the setting of the screen.

According to an embodiment, the electronic device may obtain information about at least one application providing at least one screen setting corresponding to the selected at least one user interface and setting information about at least one screen as one data file.

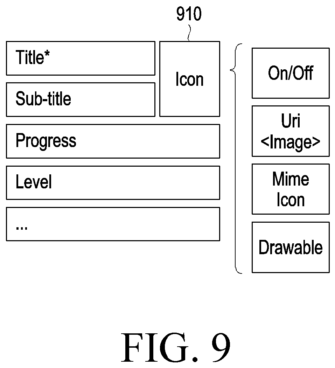

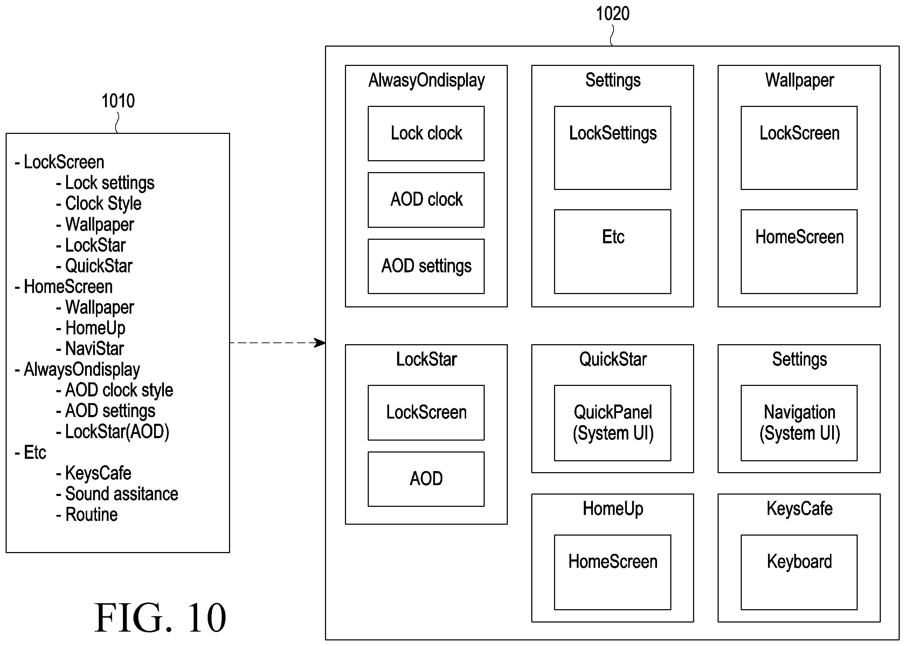

According to an embodiment, one data file in which setting information about at least one screen obtained from at least one application is grouped is described with reference to FIGS. 9 and 10.

According to an embodiment, in operation 350, the electronic device may transmit the data file to an external server (e.g., the server 108 of FIG. 1).

According to an embodiment, the electronic device may select a setting of a screen to be shared among the settings of the applied screen, and transmit it together with an image, a video, and/or a description to a server for sharing the screen setting .

According to an embodiment, the server for sharing the screen setting may store the setting of the screen to be shared, received from the electronic device. The server may transfer information including information related to a stored location of the setting of the screen to be shared to the electronic device in the form of a quick response (QR) code, a barcode and/or URL. According to an embodiment, the electronic device may receive a QR code, a barcode, and/or URL from the external server after transmitting the data file to the external server. The electronic device may display at least one of the QR code, the barcode, or the URL for sharing the data file on the display.

Accordingly, the external electronic device may scan the QR code or share the URL displayed on the electronic device and share the data file by the electronic device without a search through the server.

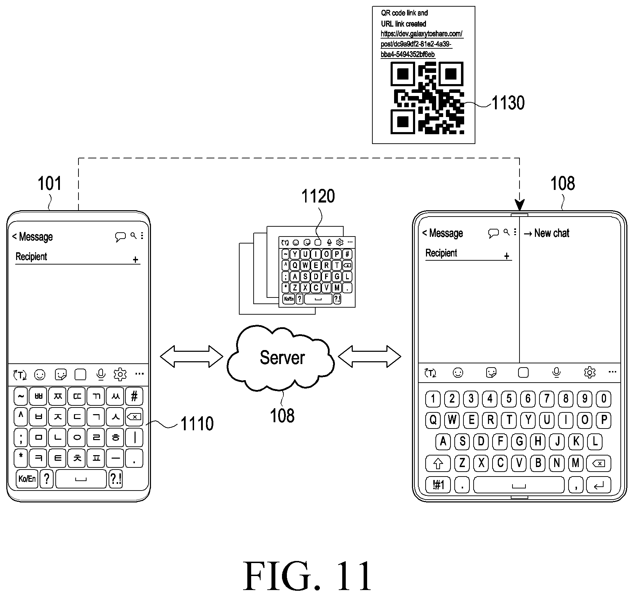

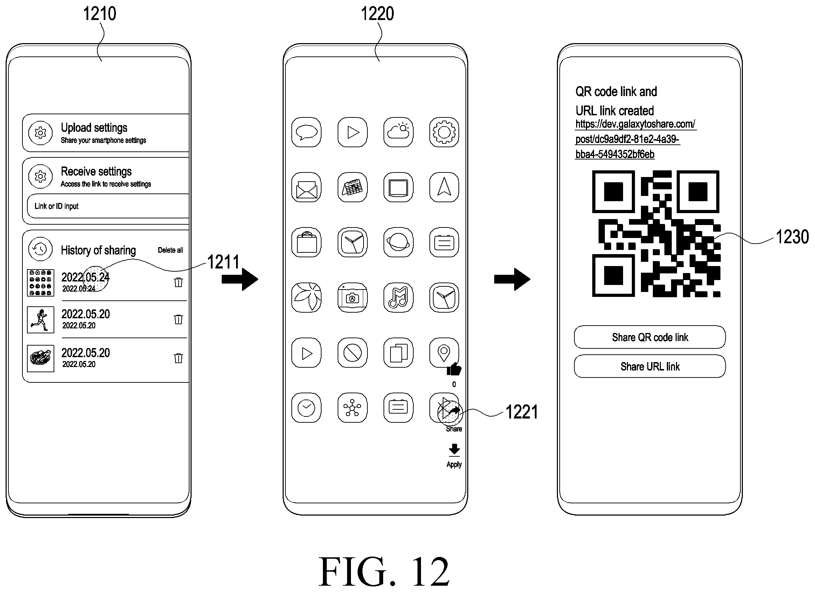

According to an embodiment, an operation of displaying at least one of the QR code or the URL by the electronic device is described with reference to FIGS. 11 and 12.

As described above, the electronic device according to embodiments of the disclosure may more easily share screen settings (e.g., decoration) of the mobile device, and the user of the sharing electronic device may apply screen settings of another device without complicated settings.

FIG. 4 is a view illustrating an application list for a screen setting of an electronic device according to an embodiment.

According to an embodiment, the electronic device (e.g., the electronic device 101 of FIG. 1 or the processor 120 of FIG. 1) may display an application list 410 and 420 related to the screen setting through the execution screen of the screen setting sharing application for sharing the screen setting. According to an embodiment, the application list 410 and 420 may include the application related to the screen setting applied to the electronic device. According to an embodiment, the application list 410 and 420 may include an application related to a shareable screen setting among screen settings applied to the electronic device.

According to an embodiment, the application list 410 and 420 may include an application (e.g., keys cafe) capable of setting the color, key size, animation effect, and/or sound of the keyboard.

According to an embodiment, the application list 410 and 420 may include an application (e.g., routine+) for automatically setting a plurality of functions performed as routines.

According to an embodiment, the application list 410 and 420 may include an application (e.g., lockstar) for setting the style of the lock screen.

According to an embodiment, the application list 410 and 420 may include an application (e.g., quickstar) for setting the style of the quick panel notification window.

According to an embodiment, the application list 410 and 420 may include an application (e.g., clockface) for setting a clock style.

According to an embodiment, the application list 410 and 420 may include an application (e.g., multistar) for setting a multi-window style.

According to an embodiment, the application list 410 and 420 may include an application (e.g., navista) for setting the style of the navigation bar.

According to an embodiment, the application list 410 and 420 may include an application (e.g., home up) for setting the style of the home screen.

According to an embodiment, the application list 410 and 420 may include an application (e.g., notistar) for setting the style of the notification screen.

According to an embodiment, the application list 410 and 420 may include an application (e.g., pentastic) for customizing the function of the stylus pen.

According to an embodiment, the application list 410 and 420 may include an application (e.g., wonderland) for setting a style of a moving background screen.

According to an embodiment, the application list 410 and 420 may include an application (e.g., one hand operation+) for customizing user inputs and functions to control the electronic device with one hand.

According to an embodiment, the application list 410 and 420 may include an application (e.g., edge touch) for customizing the location, size, and/or function of the touch area among edge areas of the display.

According to an embodiment, the application list 410 and 420 may include an application (e.g., soundassident) for customizing audio-related functions.

According to an embodiment, the electronic device may select at least one user interface related to the screen setting to be shared from among the plurality of user interfaces included in the application list 410 and 420.

FIG. 5 is a view illustrating an operation of selecting a screen setting to be shared according to an embodiment.

Referring to FIG. 5, if an electronic device (e.g., the electronic device 101 of FIG. 1 or the processor 120 of FIG. 1) receives a user input for sharing a screen setting through an execution screen of an application for sharing a screen setting, the electronic device may display a plurality of user interfaces related to sharable screens. According to an embodiment, the shareable screens may include at least one of a home screen, a lock screen, a clock screen, a keyboard screen, a multi-window, a navigation bar, a notification screen, a stylus pen-related screen, a background screen, or an execution screen of an application applied to the electronic device.

According to an embodiment, if a user input for sharing a screen setting is received, the electronic device may display a first screen 510 for selecting an image or video to represent the screen setting to be shared, and if an image or video is selected, the electronic device may display a second screen 520 including at least one screen list capable of sharing the screen setting.

According to an embodiment, if a user input for sharing a screen setting is received, the electronic device may display the second screen 520 without displaying the first screen 510. According to an embodiment, the image and/or video included in the first screen 510 may be an image obtained by screen capturing sharable screens and/or a recorded video.

According to an embodiment, the second screen 520 may include a list of at least one screen (e.g., a home screen, a lock screen, a clock screen, a keyboard screen, a multi-window, a navigation bar, a notification screen, a stylus pen-related screen, a background screen, or an execution screen of an application) applied to the electronic device.

According to an embodiment, the electronic device may receive a user input for selecting a screen to be shared among screen settings applied to the electronic device through the second screen 520.

According to an embodiment, the electronic device may display a third screen 530 including at least one user interface corresponding to the setting of the screen for which the setting is to be shared.

According to an embodiment, at least one setting may be included in each of the at least one screen for which the setting is to be shared, and the electronic device may display at least one setting included in each of the at least one screen for each screen. According to an embodiment, the settings of the screen may include at least one of a background screen, a function, arrangement, shape, or color of at least one object.

According to an embodiment, FIG. 5 illustrates the second screen 520 and the third screen 530 as separate screens, but a single screen may be present. For example, a screen and a screen setting applied to the electronic device may be displayed on one screen.

According to an embodiment, if a user input for selecting a setting of at least one screen to be shared is received through the third screen 530, the electronic device may display a fourth screen 540 for inputting a description and a tag for the selected at least one screen setting.

According to an embodiment, if receiving a user input for inputting a description related to the selected screen setting and/or for setting a tag, and a user input for transmitting screen setting information to the server, the electronic device may generate at least one selected screen setting information, description, and/or tag as one data file and transmit the generated data file to an external server (e.g., the server 108 of FIG. 1).

According to an embodiment, if a user input for setting a description input and/or setting a tag is not received through the fourth screen 540, and a user input for transmitting the screen setting information to the server is received, the electronic device may generate the selected at least one screen setting information as one data file and transmit the generated data file to the external server.

In the foregoing, the operation of sharing the screen setting through the execution screen of the application for sharing the screen setting has been described, but according to an embodiment, the screen setting may be shared through the execution screen of the application where the screen setting is to be shared.

For example, if receiving a user input for sharing the screen setting through the execution screen of a specific application, the electronic device may display at least one user interface related to the screen setting applied to the specific application.

According to an embodiment, if a user input for sharing a screen setting is received through an execution screen of a specific application, the electronic device may display a screen for selecting an image or video representing the screen setting, and if an image or video is selected, may display at least one user interface related to a screen setting applied to a specific application.

According to an embodiment, if receiving a user input for selecting at least one of at least one user interface related to the screen setting applied to the specific application, the electronic device may generate the screen setting corresponding to the at least one user interface as one data file and transmit the generated data file to the external server.

As such, it is possible to selectively share only the screen setting to be shared among the screen settings applied to the electronic device.

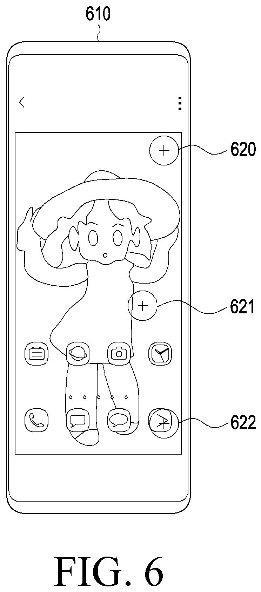

FIG. 6 is a view illustrating an operation of selecting a screen setting to be shared according to an embodiment.

Referring to FIG. 6, if an electronic device (e.g., the electronic device 101 of FIG. 1 or the processor 120 of FIG. 1) performs a screen capture on a specific screen 610 to be shared, the electronic device may obtain at least one screen setting 620, 621, and 622 included in the screen 610. According to an embodiment, the electronic device may identify at least one process being executed in relation to the screen captured screen 610. The electronic device may obtain at least one screen setting 620, 621, and 622 information from at least one process related to the screen 610. For example, the electronic device may screen-capture the screen 610 if the user input is received through the user interface for sharing the screen setting displayed in a partial area of the display (e.g., the display module 160 of FIG. 1). According to an embodiment, the electronic device may receive the user input through the user interface for sharing the screen setting displayed in the partial area of the display after screen-capturing the screen 610.

For example, if screen capture is performed on the home screen 610, the electronic device may obtain screen setting information related to the background screen 620 of the home screen, the arrangement and/or type 621 of objects (e.g., application icons, widgets and/or navigation bars), and/or the type of application 622 disposed in a partial area (e.g., hotseat) of the home screen.

According to an embodiment, the electronic device may display at least one user interface respectively corresponding to the obtained screen setting information. According to an embodiment, the at least one user interface respectively corresponding to the obtained screen setting information may be displayed on a screen separate from the screen-captured screen, or the screen-captured image may be displayed in a partial area of the display while displaying the at least one user interface respectively corresponding to the obtained screen setting information in a remaining partial area.

According to an embodiment, if receiving a user input for selecting at least one of the at least one user interface, the electronic device may generate the screen setting information respectively corresponding to the selected user interface as one data file and transmit the generated data file to the external server (e.g., the server 108 of FIG. 1).

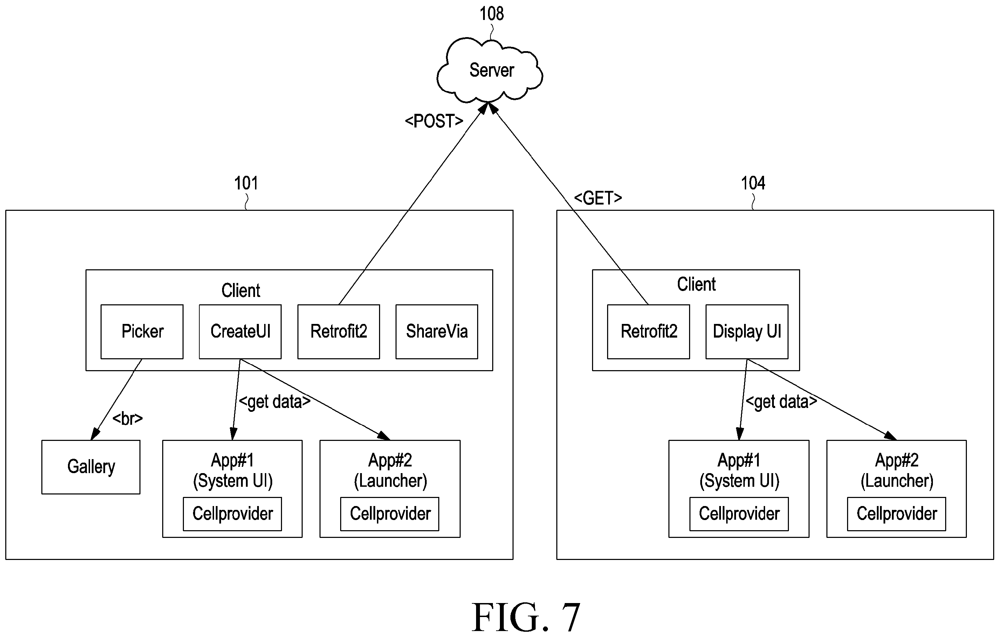

FIG. 7 is a view illustrating a screen setting sharing operation by an electronic device according to an embodiment.

Referring to FIG. 7, an electronic device 101 (e.g., the electronic device 101 of FIG. 1) may include an application (e.g., a client) for sharing a screen setting. According to an embodiment, an application (e.g., a client) for sharing a screen setting may include a picker module, a CreateUI module, a Retrofit2 module, and/or a Sharevia module.

According to an embodiment, the picker module may be a module for selecting a photo and/or video from a photo album application (e.g., a gallery application).

According to an embodiment, the CreateUI module may be a module that generates and displays a screen (UI) provided for sharing a screen setting in an application for sharing a screen setting.

According to an embodiment, the Retrofit2 module may be a module for providing an interface for sharing a screen setting between the server 108 (e.g., the server 108 of FIG. 1) and the electronic device 101.

According to an embodiment, the Sharevia module may be a module that shares a data file (e.g., a QR code, a URL, and/or a barcode) including screen setting information to be shared.

According to an embodiment, the external electronic device 104 (e.g., the electronic device 104 of FIG. 1) may include an application (e.g., a client) for sharing a screen setting. According to an embodiment, the application (e.g., a client) for sharing a screen setting may include a Retrofit2 module, a DisplayUI module, and/or a Sharevia module.

According to an embodiment, the Retrofit2 module may be a module for providing an interface for sharing a screen setting between the server 108 (e.g., the server 108 of FIG. 1) and the external electronic device 104.

According to an embodiment, the DisplayUl module may be a module for displaying a UI related to a screen setting to be shared through the application for sharing a screen setting, and applying and displaying a screen setting selected through the UI.

According to an embodiment, the Sharevia module may be a module that shares the data file (e.g., the QR code, the URL, and/or the barcode) including screen setting information to be shared. According to an embodiment, the electronic device 101 (e.g., the electronic device 101 of FIG. 1) may obtain a cellprovider of each application (e.g., App#1 (e.g., System UI) and App#2 (e.g., Launcher) respectively corresponding to a plurality of screens applied to the electronic device 101. According to an embodiment, the cellprovider may include setting information about a shareable screen.

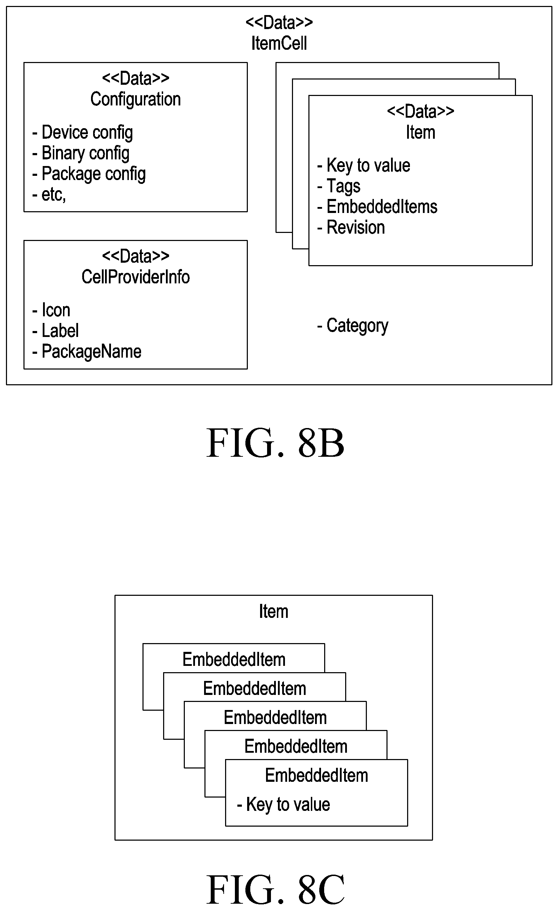

According to an embodiment, the electronic device 101 may display at least one user interface related to settings of at least one screen that may be shared based on the obtained cellprovider. According to an embodiment, if receiving the user input for selecting at least some of the at least one user interface, the electronic device 101 may receive screen setting information from the cellprovider corresponding to the selected user interface. For example, the screen setting information may include data (e.g., item data) related to the application of screen settings and/or data (e.g., expression data) related to thumbnail images of screen settings. According to an embodiment, the data structure is described below with reference to FIGS. 8A, 8B, 8C and 9.

According to an embodiment, the electronic device 101 may generate screen setting information as one data file and transmit the generated data file to the external server 108 for sharing the screen setting. According to an embodiment, the data file may include data in the form of a QR code and/or a URI.

According to an embodiment, the external electronic device 104 may receive the data file from the external server 108 and transfer only screen setting information to be shared among screen setting information included in the received data file to the cellprovider of a corresponding application. According to an embodiment, the external electronic device 104 may select a screen setting to be shared through the user input.

FIG. 8A is a view illustrating an operation of obtaining data for screen setting sharing by an electronic device according to an embodiment.

Referring to FIG. 8A, an electronic device (e.g., the electronic device 101 of FIG. 1 or the processor 120 of FIG. 1) may obtain screen setting information from a locked screen cellprovider based on receiving the user input for sharing the screen setting of the lock screen.

According to an embodiment, the screen setting information (e.g., itemsupplier) may include data (e.g., expression item data) related to an image (e.g., thumbnail image) related to the screen setting and/or data (e.g., item data) related to the application of the screen setting.

According to an embodiment, the electronic device may transmit similar types of data among data included in the data file as a group (e.g., itemsuppliergroup (e.g., itemgroup #2)).

According to an embodiment, the screen setting information may further include information related to the cellprovider, as shown in FIG. 8B.

FIG. 8B is a view illustrating data to be shared according to an embodiment.

Referring to FIG. 8B, information related to the cellprovider may include application identification information (e.g., icon, label, and/or package name).

Among the data included in the screen setting information obtained by the electronic device, data (e.g., item data) related to the application of the screen setting may include a value to be shared in the form of a key and/or value. According to an embodiment, the key may be a unique value.

According to an embodiment, the application for sharing the screen setting of the external electronic device (e.g., the electronic device 104 of FIG. 1) to share the screen setting may apply the screen setting based on the data (e.g., expression item data) related to the image (e.g., a thumbnail image) related to the screen setting included in the screen setting information without using the key or the value.

FIG. 8C is a view illustrating data to be shared according to an embodiment.

Referring to FIG. 8C, when a key and/or value other than the key and/or value included in the data (e.g., item data) related to the application of the screen setting of the screen setting information is included, the screen setting information may add an embedded item. According to an embodiment, the embedded item may also include data in the form of a QR code and/or a URI. For example, when the key and/or value other than the key and/or value included in the data (e.g., item data) related to the application of the screen setting of at least one screen setting information (e.g., at least one icon information included in the navigation bar) applicable to the navigation bar is included, path information about at least one image related to the screen setting (e.g., navigation bar icon information) may be added, to the embedded item, as the data in the form of a QR code and/or a URI.

For example, when the data of the data file should be transmitted together with a string type of data other than the URI type or together with another data file, the data or the another data file in the string type may be added, as an embedded item, to the data file.

FIG. 9 is a view illustrating image data included in shared data according to an embodiment. For example, FIG. 9 is a view illustrating a structure of data (e.g., expression item data) related to an image (e.g., a thumbnail image) related to the screen setting included in the screen setting information.

Referring to FIG. 9, the data related to the image (e.g., a thumbnail image) related to the screen setting included in the screen setting information may include an icon 910 including at least one image.

According to an embodiment, the icon 910 (or image) including at least one image may include an on/off icon (or image), a URI image, a multipurpose internet mail extensions (Mime)-type icon (or image) and/or a drawable image included in the setting screen.

FIG. 10 is a view illustrating an application list included in shared data according to an embodiment.

Referring to FIG. 10, an application for sharing a screen setting of an electronic device (e.g., the electronic device 101 of FIG. 1 or the processor 120 of FIG. 1) may classify an application related to a screen setting into at least one category 1010. For example, the application for sharing a screen setting may classify a plurality of applications into three categories related to the type of screen. According to an embodiment, the three categories may be a lock screen, a home screen, and an always on display (AOD). According to an embodiment, the applications for sharing a screen setting, which do not belong to the three categories may be classified into others (etc) category.

According to an embodiment, the lock screen category may include an application (e.g., lockstart) for setting the lock setting, clock style, background screen, and style of lock screen and/or an application (e.g., quickstar) for setting the style of the quick panel notification window.

According to an embodiment, the home screen category may include an application (e.g., home up) for setting the style of the background screen or home screen and/or an application (e.g., navistar) for setting the style of the navigation.

According to an embodiment, the AOD category may include an application (e.g., lockstar) for setting the AOD clock style, the AOD setting, and/or the style of the AOD of the lock screen.

According to an embodiment, the others category may include an application (e.g., keys cafe) for setting the keyboard color, key size, animation effect, and/or sound, an application (e.g., soundassistant) for customizing audio-related functions, and/or an application (e.g., routine) for setting automation of a plurality of functions performed as routines.

According to an embodiment, the application for sharing a screen setting may apply cellprovider as the category name, not the cellprovider of the application, when shareable data among the applications included in the application list 1020 selected for sharing is included in the category.

According to an embodiment, for the category-based cellprovider, the application for sharing a screen setting may generate a data file and transmit it to the external server (e.g., the server 108 of FIG. 1).

According to an embodiment, the application for sharing a screen setting may transmit similar types of data among data included in the data file, as a group (e.g., itemsuppliergroup).

FIG. 11 is a view illustrating a screen setting sharing operation by an electronic device according to an embodiment.

Referring to FIG. 11, if receiving the user input for sharing a screen setting 1110 of an electronic device 101 (e.g., the electronic device 101 of FIG. 1), the electronic device 101 may transmit screen setting information 1120 to a server 108 (e.g., the server 108 of FIG. 1). For example, the electronic device 101 may transmit the screen setting information 1120 about the keyboard screen 1110 customized by the user to the server 108.

According to an embodiment, if receiving the user input for sharing a screen setting, the electronic device 101 may display at least one user interface respectively corresponding to at least one shareable screen setting, and transmit screen setting information 1120 corresponding to at least some user interfaces selected by the user input among the at least one user interface to the server 108.

According to an embodiment, the user input for sharing the screen setting may be received on the execution screen of the screen setting sharing application for sharing the screen setting, on the execution screen of the application corresponding to the screen setting to be shared, or through screen capture.

According to an embodiment, the screen setting information 1120 may include at least one of a background screen, a function, an arrangement, a shape, and a color of at least one object.

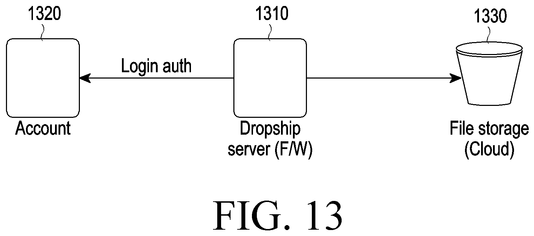

According to an embodiment, the electronic device 101 may transmit the screen setting information 1120 to the server 108 to share the screen setting information 1120 with the external electronic device 104 (e.g., the electronic device 104 of FIG. 1) through a dropship scheme. According to an embodiment, the dropship scheme is described below with reference to FIG. 13.

According to an embodiment, the electronic device 101 may share a QR code and/or a URL 1130 corresponding to the screen setting information 1120 after transmitting the screen setting information 1120 to the server 108. According to an embodiment, the electronic device 101 may display the QR code and/or URL 1130 corresponding to the screen setting information 1120 or transmit it to the external electronic device 104. According to an embodiment, an operation of sharing the QR code and/or URL 1130 corresponding to the screen setting information 1120 may be omitted.

According to an embodiment, the external electronic device 104 may request screen setting information from the server 108. According to an embodiment, if the external electronic device 104 receives the user input for sharing screen setting information through an execution screen of a screen setting sharing application for sharing the screen setting, the external electronic device 104 may request screen setting information from the server 108. According to an embodiment, the external electronic device 104 may display a screen setting list including at least one screen setting that may be shared through the execution screen of the screen setting sharing application, and if receiving the user input for selecting a screen setting to be shared from the screen setting list, request the selected screen setting information from the server 108. According to an embodiment, if receiving the user input for searching for a screen setting through the execution screen of the screen setting sharing application, the external electronic device 104 may display at least one searched screen setting and, if receiving the user input for selecting the screen setting to be shared among the displayed at least one screen setting, request the selected screen setting information from the server 108.

According to an embodiment, if receiving the user input for selecting the URL received from the electronic device 101, recognizing the QR code 1130 received from the electronic device 101, or displayed on the electronic device 101, the external electronic device 104 may request the screen setting information corresponding to the QR code or the URL from the server 108.

According to an embodiment, the external electronic device 104 may apply at least some of the screen setting information received from the server 108. According to an embodiment, the external electronic device 104 may display at least one user interface respectively corresponding to at least one screen setting included in the screen setting information received from the server 108, and apply only a screen setting corresponding to at least some selected by the user input among at least one user interface.

According to an embodiment, if an application for applying at least some of the at least one screen setting included in the screen setting information received from the server 108 is not installed, the external electronic device 104 may display a message leading to application installation. According to an embodiment, when an application for applying a screen setting is installed, the external electronic device 104 may apply the screen setting based on the screen setting information received from the server 108.

FIG. 12 is a view illustrating an operation of displaying a QR code or a URL for screen setting sharing by an electronic device according to an embodiment.

Referring to FIG. 12, the electronic device (e.g., the electronic device 101 of FIG. 1 or the processor 120 of FIG. 1) may display a screen 1220 to which the screen setting to be shared is applied if selecting the user interface 1211 corresponding to the screen setting to be shared on the execution screen 1210 of the application to share the screen setting.

FIG. 12 illustrates and describes that the user interface 1211 corresponding to the screen setting to be shared is selected from among the plurality of user interfaces corresponding to the screen setting having a history of sharing but, according to an embodiment, the user interface to be shared among the user interfaces corresponding to at least one shareable screen setting among the screen settings applied to the electronic device may be selected.

According to an embodiment, if receiving the user input 1221 instructing to start sharing after displaying the screen 1220 to which the screen setting to be shared is applied, the electronic device may transmit the screen setting information to the server (e.g., the server 108 of FIG. 1) and display a screen 1230 including the QR code and/or URL information corresponding to the transmitted screen setting information. According to an embodiment, the QR code and/or URL information may be access information for an external electronic device (e.g., the electronic device 104 of FIG. 1) to access the screen setting information.

According to an embodiment, the electronic device may transmit the QR code and/or URL information to the external electronic device through a message, an email, and/or an SNS application.

As such, it is possible to immediately access the screen setting information without a separate search operation by providing the QR code and/or URL information corresponding to the transmitted screen setting information to the external electronic device.

FIG. 13 is a view illustrating a screen setting sharing scheme by an electronic device according to an embodiment.

Referring to FIG. 13, a data file including screen setting information transmitted from an electronic device (e.g., electronic device 101 of FIG. 1) may be stored in a dropship server 1310 (e.g., the server 108 of FIG. 1).

According to an embodiment, dropship is a method of uploading and sharing files to the dropship server 1310 without restrictions on terminal devices and operating systems (e.g., Android or iOS).

According to an embodiment, the dropship may generate a pin code based on the user account (e.g., account), add a file to be shared to the dropship server 1310, and search and/or download a file based on the URL, barcode and/or QR code including the dropship domain and the pin code through another user account.

According to an embodiment, the dropship server 1310 may perform login authentication to the server 1320 related to the user account and generate the pin code.

For example, the pin code may be a code composed of about six natural numbers. According to an embodiment, if the shared file is uploaded through the pin code, the dropship server 1310 may map the pin code and the shared file.

According to an embodiment, the dropship server 1310 may store the uploaded shared file in file storage 1330.

According to an embodiment, the dropship server 1310 may provide a search and/or download of the shared file based on the pin code. According to an embodiment, the dropship server 1310 may provide a search and/or download of the file stored in the file storage 1330 based on the pin code.

According to an embodiment, the pin code may have a valid period. For example, the pin code may have a validity period of about 1 hour to about 24 hours.

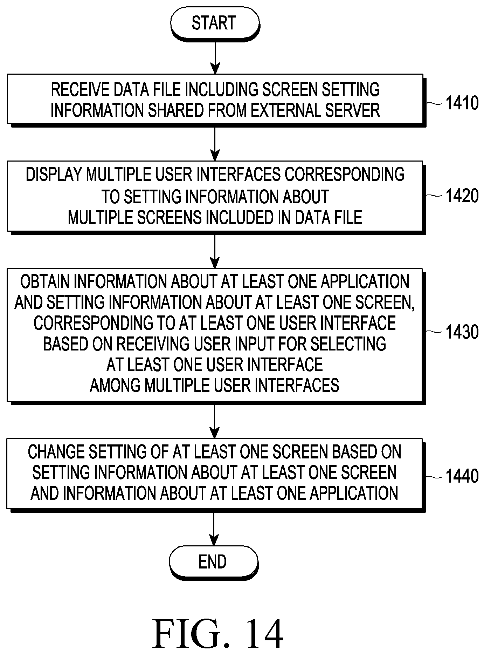

FIG. 14 is a flowchart illustrating an operation of receiving sharing of a screen setting by an electronic device according to an embodiment.

According to an embodiment, in operation 1410, the electronic device (e.g., the electronic device 104 of FIG. 1) may receive a data file including screen setting information shared from an external server (e.g., the server 108 of FIG. 1).

According to an embodiment, the electronic device may receive the data file for a screen setting selected or searched from the execution screen of the screen setting sharing application for screen setting sharing.

According to an embodiment, the electronic device may receive the data file corresponding to the QR code or URL through URL selection or scanning of the QR code received from the external electronic device (e.g., the electronic device 101 of FIG. 1).

According to an embodiment, in operation 1420, the electronic device may display a plurality of user interfaces corresponding to setting information about a plurality of screens included in the data file. According to an embodiment, the setting information about the plurality of screens may be classified for each application. According to an embodiment, the setting information about the plurality of screens may be classified into at least one screen setting applicable to each application and displayed in the form of a list.

According to an embodiment, the electronic device may display a plurality of user interfaces based on data (e.g., item data) related to the application of the screen setting included in the data file and/or data (e.g., expression data) related to the thumbnail image of the screen setting.

According to an embodiment, in operation 1430, the electronic device may obtain information about at least one application and setting information about at least one screen, corresponding to at least one user interface based on receiving the user input for selecting at least one user interface among the plurality of user interfaces.

According to an embodiment, the electronic device may display a message leading to installation of at least some of the at least one application based on at least some of the at least one application being not installed in the electronic device.

According to an embodiment, in operation 1440, the electronic device may change (or apply) a setting of at least one screen based on information about at least one application and setting information about at least one screen.

According to an embodiment, the electronic device may display a screen having a changed setting.

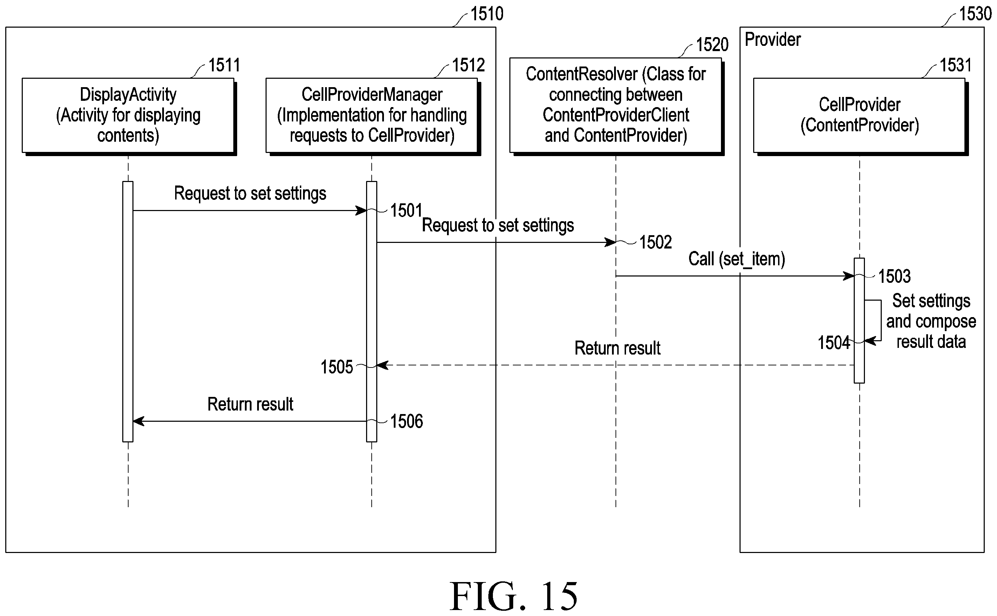

FIG. 15 is a flowchart illustrating an operation of applying a shared screen setting by an electronic device according to an embodiment.

Referring to FIG. 15, a screen setting sharing application 1510 for screen setting sharing of an electronic device (e.g., the electronic device 104 of FIG. 1) sharing the data file including the screen setting information from a server (e.g., the server 108 of FIG. 1) may include a display activity module 1511 for displaying the shared content (e.g., screen setting) and a cellprovider manager 1512 for controlling a request for an application (e.g., cellprovider).

According to an embodiment, in operation 1501, the display activity module 1511 may request the cellprovider manager 1512 to apply the screen setting selected by the user.

According to an embodiment, in operation 1502, the cellprovider manager 1512 may request a content resolver 1520 connecting between the screen setting sharing application 1510 and the application (provider) 1530 providing the screen setting to apply the screen setting selected by the user.

According to an embodiment, in operation 1503, the content resolver 1520 may call a set_item function to the cellprovider 1531 which is a content provider.

According to an embodiment, in operation 1504, the cellprovider 1531 may attempt to apply the settings received from the screen setting sharing application 1510 in the set_item function and construct result data. According to an embodiment, the result data may include a result of performing screen setting application and/or a result requiring installation of an application required for screen setting application.

According to an embodiment, in operation 1505, the cellprovider 1531 may transfer the result data to the cellprovider manager 1512 and, in operation 1506, the cellprovider manager 1512 may transfer the result data to the display activity module 1511.

According to an embodiment, the display activity module 1511 may display a screen to which the screen setting is applied or a message requesting installation of an application necessary for applying the screen setting based on the result data.

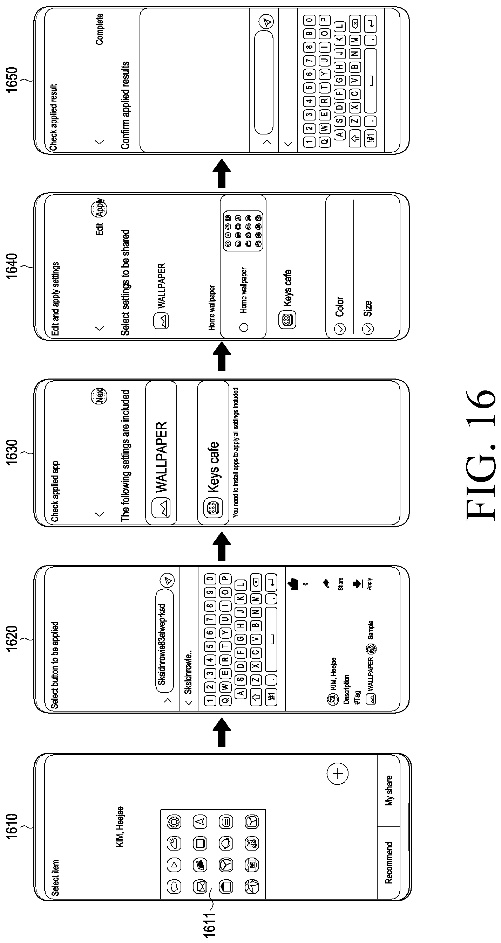

FIG. 16 is a view illustrating an operation of applying a shared screen setting by an electronic device according to an embodiment.

Referring to FIG. 16, an electronic device (e.g., the electronic device 104 of FIG. 1) receiving a data file including screen setting information shared from a server (e.g., the server 108 of FIG. 1) may display at least one representative image respectively corresponding to at least one screen setting that may be shared through an execution screen 1610 of an application for sharing a screen setting.

According to an embodiment, if receiving the user input for selecting the representative image 1611 corresponding to the screen setting to be shared among the at least one representative image displayed on the execution screen 1610 of the application for sharing a screen setting, the electronic device may display a screen 1620 for identifying an example of a screen setting related to the representative image 1611.

According to an embodiment, if receiving the user input for proceeding to a next step (e.g., applying the screen setting) after displaying the screen 1620 for identifying the example of the screen setting, the electronic device may display a screen 1630 for identifying information about the screen setting included in the data file. According to an embodiment, only information about the screen to which the setting is to be applied may be included in the screen 1630 for identifying the information about the screen setting. For example, the screen 1630 for identifying the information about the screen setting may include types of setting-applied screens, such as the home screen, lock screen, or AOD. According to an embodiment, the screen 1630 for identifying the information about the screen setting may include application information necessary to apply the screen setting.

According to an embodiment, if receiving the user input for proceeding to the next step after displaying the screen 1630 for identifying the information about the screen setting, the electronic device may display a screen 1640 for identifying at least one screen setting which may be applied to a screen to which the setting is to be applied. For example, the screen 1640 for identifying at least one screen setting applicable to the screen where the setting is to be applied may include at least one screen setting information, in the form of a list, applied to the screen as the at least one screen setting applicable to the lock screen, or at least one screen setting applicable to the home screen. According to an embodiment, at least one screen setting may be applied through an application related to a corresponding screen setting. For example, the screen 1640 for identifying at least one screen setting applicable to the screen where the setting is to be applied may include a background screen (e.g., home wallpaper) item of the home screen which is screen setting information about the application (e.g., wallpaper) related to the background screen and/or a color item and/or a size item which is screen setting information about the application (e.g., keys cafe) related to the keyboard style.

According to an embodiment, the screen 1630 including only information about the type of screen and the screen 1640 including at least one screen setting information applied to the screen may be displayed as one screen.

According to an embodiment, if receiving a user input for selecting the screen setting to be applied through the screen 1640 for identifying at least one applicable screen setting, the electronic device may display a screen 1650 displaying the application result of the screen setting. For example, the screen 1650 displaying the application result of the screen setting may include an example of a screen to which the screen setting information is applied. For example, it may include an example of a screen including a keyboard to which a color and/or size of a keyboard style selected through the screen 1640 for identifying a screen setting is applied.

According to an embodiment, the screen 1650 displaying the application result of the screen setting may include success and/or failure in application of the screen setting. According to an embodiment, if the application fails because the application required for screen setting is not installed, the electronic device may display a message leading to installation of the corresponding application.

For example, if the screen setting information includes a widget for an application that is not installed in the electronic device, the electronic device may display a message to lead to a connection to a screen where the application may be downloaded and apply the widget after the installation of the application is completed.

According to an embodiment, the electronic device may set a feature dependent on the feature of the screen setting to be applied. For example, in a circumstance in which the resolution supporting a refresh rate of 120Hz is full high definition (FHD), and only 60Hz is supported for quad high definition (QHD), when a screen setting is applied to change the refresh rate of the QHD electronic device to 120Hz, the electronic device may change the resolution to FHD along with the change of the refresh rate to 120Hz.

According to an embodiment, if the received screen setting is applied in a state in which a function (e.g., routine+) of automatically changing the setting under a specific condition is activated, the setting may be automatically changed while the screen setting is applied. The electronic device may deactivate the function of automatically changing the setting while the screen setting is applied and, if the application of the screen setting is completed, reactivate the automatically changing function.

According to an embodiment, when the user's additional operation is required after the screen setting is applied, the electronic device may display an execution screen for performing the additional operation through the screen setting sharing application and perform the operation based on a user input received through the execution screen.

For example, when the applied screen setting includes private information (e.g., home address and/or Wi-Fi information), the electronic device may display a screen for changing the private information to be applied to the screen setting.

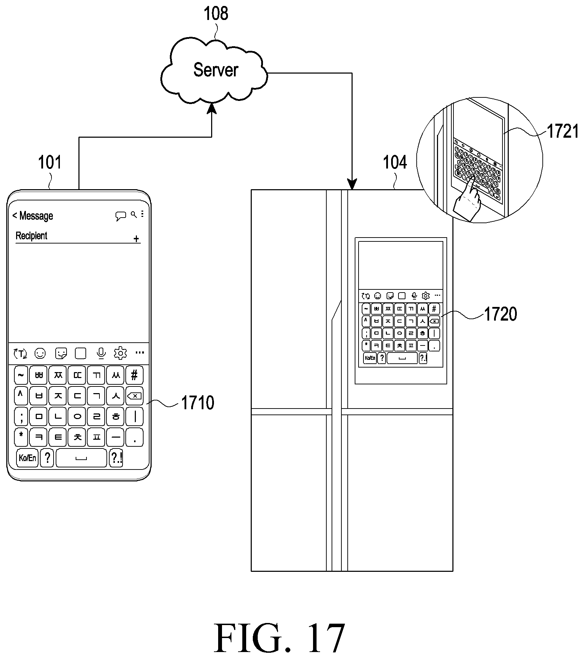

FIG. 17 is a view illustrating an application example in which an electronic device where a screen setting is shared is a smart refrigerator according to an embodiment.

Referring to FIG. 17, the electronic device 101 (e.g., the electronic device 101 of FIG. 1) may transmit the screen setting 1710 (e.g., a keyboard screen) applied to the electronic device 101 to the external electronic device 104 (e.g., the electronic device 104 of FIG. 1), which is a smart refrigerator, through the server 108 (e.g., the server 108 of FIG. 1).

According to an embodiment, the external electronic device 104 may change from the existing screen setting 1721 to the screen 1720 to which the screen setting received through the server 108 is applied.

As described above, the customized keyboard screen of the electronic device 101 may be shared with the external electronic device 104, which is a refrigerator, providing a continuous use environment.

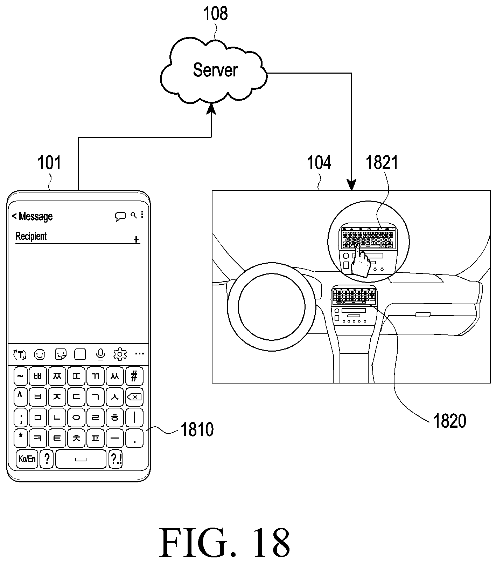

FIG. 18 is a view illustrating an application example in which an electronic device where a screen setting is shared is a navigation device according to an embodiment.

Referring to FIG. 18, the electronic device 101 (e.g., the electronic device 101 of FIG. 1) may transmit the screen setting 1810 (e.g., a keyboard screen) applied to the electronic device 101 to the external electronic device 104 (e.g., the electronic device 104 of FIG. 1), which is a navigation device for a means of transportation (e.g., vehicle, motorcycle, bicycle) through the server 108 (e.g., the server 108 of FIG. 1).

According to an embodiment, the external electronic device 104 may change from the existing screen setting 1821 to the screen 1820 to which the screen setting received through the server 108 is applied.

As described above, the customized keyboard screen of the electronic device 101 may be shared with the external electronic device 104, which is a navigation device, providing a continuous use environment.

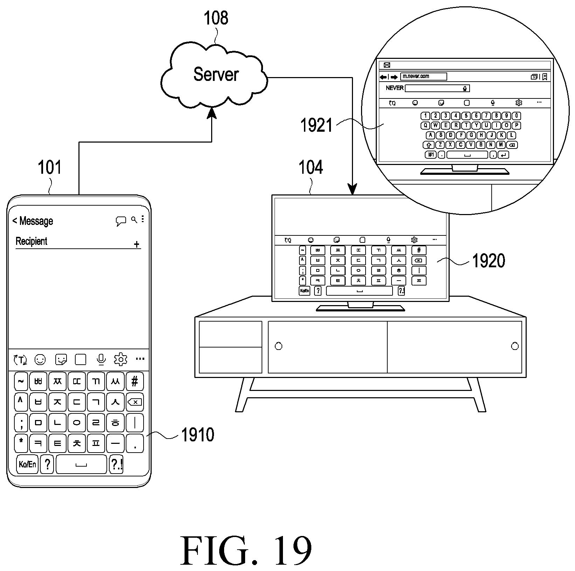

FIG. 19 is a view illustrating an application example in which an electronic device where a screen setting is shared is a smart TV according to an embodiment.

Referring to FIG. 19, the electronic device 101 (e.g., electronic device 101 of FIG. 1) may transmit the screen setting 1910 (e.g., a keyboard screen) applied to the electronic device 101 to the external electronic device 104 (e.g., the electronic device 104 of FIG. 1) which is a smart TV through the server 108 (e.g., the server 108 of FIG. 1).

According to an embodiment, the external electronic device 104 may change from the existing screen setting 1921 to the screen 1920 to which the screen setting received through the server 108 is applied.

As described above, the customized keyboard screen of the electronic device 101 may be shared with the external electronic device 104 that is a TV, providing a continuous use environment.

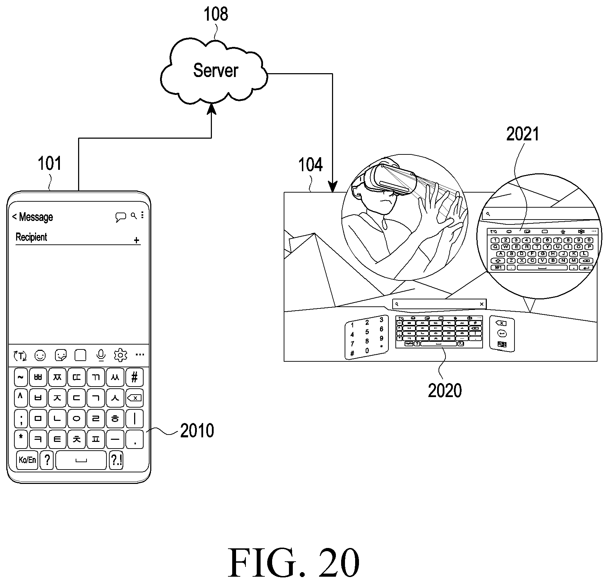

FIG. 20 is a view illustrating an application example in which an electronic device where a screen setting is shared is a head-mounted device according to an embodiment.

Referring to FIG. 20, the electronic device 101 (e.g., electronic device 101 of FIG. 1) may transmit the screen setting 2010 (e.g., a keyboard screen) applied to the electronic device 101 to the external electronic device 104 (e.g., the electronic device 104 of FIG. 1), which is a head-mounted device that provides a virtual reality screen or an augmented reality screen, through the server 108 (e.g., the server 108 of FIG. 1). According to an embodiment, the external electronic device 104 may be a glasses-type wearable device as well as the head-mounted device.

According to an embodiment, the external electronic device 104 may change from the existing screen setting 2021 to the screen 2020 to which the screen setting received through the server 108 is applied.

As described above, the customized keyboard screen of the electronic device 101 may be shared with the external electronic device 104, which is a head-mounted device, providing a continuous use environment.

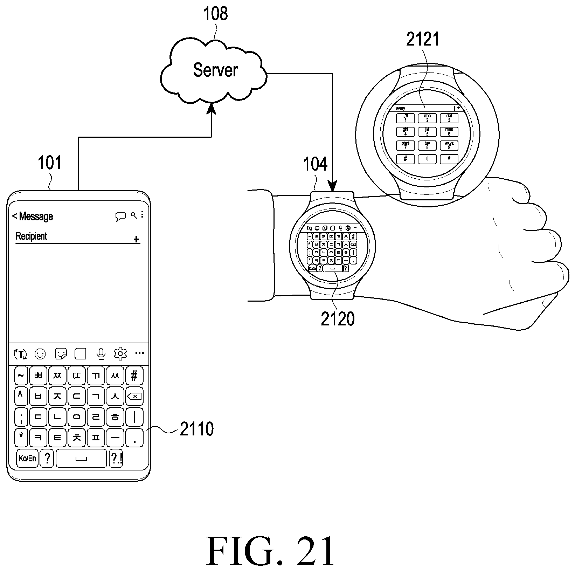

FIG. 21 is a view illustrating an application example in which an electronic device where a screen setting is shared is a smart watch according to an embodiment.

Referring to FIG. 21, the electronic device 101 (e.g., electronic device 101 of FIG. 1) may transmit the screen setting 2110 (e.g., a keyboard screen) applied to the electronic device 101 to the external electronic device 104 (e.g., the electronic device 104 of FIG. 1) which is a smart watch through the server 108 (e.g., server 108 of FIG. 1).

According to an embodiment, the external electronic device 104 may change from the existing screen setting 2121 to the screen 2120 to which the screen setting received through the server 108 is applied.

As such, the customized keyboard screen of the electronic device 101 may be shared with the external electronic device 104, which is a smart watch, providing a continuous use environment.

According to an embodiment, an electronic device (e.g., the electronic device 101 of FIG. 1) may comprise a display (e.g., the display module 160 of FIG. 1), memory (e.g., the memory 130 of FIG. 1), a communication module (e.g., the communication module 190 of FIG. 1), and at least one processor (e.g., the processor 120 of FIG. 1) operatively connected to the display, the memory, and the communication module.

According to an embodiment, the at least one processor may display a plurality of user interfaces corresponding to a screen setting applied to the electronic device based on a plurality of applications stored in the memory.

According to an embodiment, the at least one processor may receive a first user input for selecting at least one user interface among the plurality of user interfaces.

According to an embodiment, the at least one processor may obtain each of pieces of setting information about at least one screen corresponding to the selected at least one user interface.

According to an embodiment, the at least one processor may obtain a data file obtained by grouping at least one piece of application information corresponding to the selected at least one user interface and the obtained setting information about the at least one screen.

According to an embodiment, the at least one processor may transmit the data file to an external server (e.g., the server 108 of FIG. 1).

According to an embodiment, the at least one processor may display at least one image captured for a screen displayed on the display.

According to an embodiment, the at least one processor may display the plurality of user interfaces corresponding to a setting included in an image selected among the at least one image.

According to an embodiment, the at least one processor may display an execution screen of one of the plurality of applications.

According to an embodiment, the at least one processor may display the plurality of user interfaces corresponding to a setting of the execution screen of the one application based on receiving a second user input for sharing a setting of a screen through the execution screen of the one application.

According to an embodiment, the at least one processor may display the plurality of user interfaces corresponding to a setting of a shareable screen based on receiving a third user input for executing an execution screen of a screen sharing application for sharing a setting of a screen.

According to an embodiment, the setting of the screen may include at least one of a background screen, a function, an arrangement, a shape, or a color of at least one object.

According to an embodiment, the setting information about the at least one screen may include at least one of data corresponding to the setting of the screen or a thumbnail image corresponding to the setting of the screen.

According to an embodiment, the screen applied to the electronic device may include at least one of a home screen, a lock screen, a clock screen, a keyboard screen, a multi-window, a navigation bar, a notification screen, a stylus pen-related screen, a background screen, or an application execution screen.

According to an embodiment, the at least one processor may display at least one of a quick response (QR) code or a uniform resource locator (URL) for sharing the data file on the display after transmitting the data file to the external server.

According to an embodiment, an electronic device (e.g., the electronic device 104 of FIG. 1) may comprise a display, memory, a communication module, and at least one processor operatively connected to the display, the memory, and the communication module.

According to an embodiment, the at least one processor may receive a data file including screen setting information shared from an external server (e.g., the server 108 of FIG. 1).

According to an embodiment, the at least one processor may display a plurality of user interfaces corresponding to setting information about a plurality of screens included in the data file.

According to an embodiment, the at least one processor may, based on receiving a user input for selecting at least one user interface among the plurality of user interfaces, obtain information about at least one application and setting information about at least one screen, corresponding to the at least one user interface.

According to an embodiment, the at least one processor may change a setting of at least one screen based on the information about the at least one application and the setting information about the at least one screen.

According to an embodiment, the at least one processor may, based on at least some of the at least one application being not installed on the electronic device, display a message for leading to install at least some of the at least one application.

According to an embodiment, a method for controlling an electronic device may comprise displaying a plurality of user interfaces corresponding to a screen setting applied to the electronic device based on a plurality of applications stored in memory.

According to an embodiment, the method for operating the electronic device may comprise receiving a first user input for selecting at least one user interface among the plurality of user interfaces.

According to an embodiment, the method for operating the electronic device may comprise obtaining each of pieces of setting information about at least one screen corresponding to the selected at least one user interface.

According to an embodiment, the method for operating the electronic device may comprise obtaining a data file obtained by grouping at least one piece of application information corresponding to the selected at least one user interface and the obtained setting information about the at least one screen.

According to an embodiment, the method for operating the electronic device may comprise transmitting the data file to an external server.

According to an embodiment, displaying the plurality of user interfaces may display at least one image captured for a screen displayed on a display.

According to an embodiment, displaying the plurality of user interfaces may display the plurality of user interfaces corresponding to a setting included in an image selected among the at least one image.

According to an embodiment, displaying the plurality of user interfaces may display an execution screen of one of the plurality of applications.

According to an embodiment, displaying the plurality of user interfaces may display the plurality of user interfaces corresponding to a setting of the execution screen of the one application based on receiving a second user input for sharing a setting of a screen through the execution screen of the one application.

According to an embodiment, displaying the plurality of user interfaces may display the plurality of user interfaces corresponding to a setting of a shareable screen based on receiving a third user input for executing an execution screen of a screen sharing application for sharing a setting of a screen.

According to an embodiment, the setting of the screen may include at least one of a background screen, a function, an arrangement, a shape, or a color of at least one object.

According to an embodiment, the setting information about the at least one screen may include at least one of data corresponding to the setting of the screen or a thumbnail image corresponding to the setting of the screen.

According to an embodiment, the screen applied to the electronic device may include at least one of a home screen, a lock screen, a clock screen, a keyboard screen, a multi-window, a navigation bar, a notification screen, a stylus pen-related screen, a background screen, or an application execution screen.

According to an embodiment, the method may further comprise displaying at least one of a QR code or a URL for sharing the data file on the display after transmitting the data file to the external server.

According to an embodiment, the method for controlling the electronic device may comprise receiving a data file including screen setting information shared from an external server.

According to an embodiment, the method for controlling the electronic device may comprise displaying a plurality of user interfaces corresponding to setting information about a plurality of screens included in the data file.

According to an embodiment, the method for controlling the electronic device may comprise, based on receiving a user input for selecting at least one user interface among the plurality of user interfaces, obtaining information about at least one application and setting information about at least one screen, corresponding to the at least one user interface.

According to an embodiment, the method for controlling the electronic device may comprise changing a setting of at least one screen based on the information about the at least one application and the setting information about the at least one screen.

According to an embodiment, the method for controlling the electronic device may further comprise, based on at least some of the at least one application being not installed on the electronic device, displaying a message for leading to install at least some of the at least one application.

According to an embodiment, in a non-transitory computer-readable recording medium storing one or more programs, the one or more programs may display a plurality of user interfaces corresponding to a screen setting applied to the electronic device based on a plurality of applications stored in the memory, by the electronic device.

According to an embodiment, the one or more programs may comprise instructions for the electronic device to receive a first user input for selecting at least one user interface among the plurality of user interfaces.

According to an embodiment, the one or more programs may comprise instructions for the electronic device to obtain each of pieces of setting information about at least one screen corresponding to the selected at least one user interface.

According to an embodiment, the one or more programs may comprise instructions for the electronic device to obtain a data file obtained by grouping at least one piece of application information corresponding to the selected at least one user interface and the obtained setting information about the at least one screen.

According to an embodiment, the one or more programs may comprise instructions for the electronic device to transmit the data file to an external server.

According to an embodiment, the one or more programs may comprise instructions for the electronic device to display at least one image captured for a screen displayed on the display.

According to an embodiment, the one or more programs may comprise instructions for the electronic device to display the plurality of user interfaces corresponding to a setting included in an image selected among the at least one image.

According to an embodiment, the one or more programs may comprise instructions for the electronic device to display an execution screen of one of the plurality of applications.

According to an embodiment, the one or more programs may comprise instructions for the electronic device to display the plurality of user interfaces corresponding to a setting of the execution screen of the one application based on receiving a second user input for sharing a setting of a screen through the execution screen of the one application.

According to an embodiment, the one or more programs may comprise instructions for the electronic device to display the plurality of user interfaces corresponding to a setting of a shareable screen based on receiving a third user input for executing an execution screen of a screen sharing application for sharing a setting of a screen.

According to an embodiment, the setting of the screen may include at least one of a background screen, a function, an arrangement, a shape, or a color of at least one object.

According to an embodiment, the setting information about the at least one screen may include at least one of data corresponding to the setting of the screen or a thumbnail image corresponding to the setting of the screen.

According to an embodiment, the screen applied to the electronic device may include at least one of a home screen, a lock screen, a clock screen, a keyboard screen, a multi-window, a navigation bar, a notification screen, a stylus pen-related screen, a background screen, or an application execution screen.

According to an embodiment, the one or more programs may comprise instructions for the electronic device to display at least one of a QR code or a URL for sharing the data file on the display after transmitting the data file to the external server.

According to an embodiment, in a non-transitory computer-readable recording medium storing one or more programs, the one or more programs may comprise instructions for an electronic device to receive a data file including screen setting information shared from an external server.

According to an embodiment, the one or more programs may comprise instructions for the electronic device to display a plurality of user interfaces corresponding to setting information about a plurality of screens included in the data file.

According to an embodiment, the one or more programs may comprise instructions for the electronic device to, based on receiving a user input for selecting at least one user interface among the plurality of user interfaces, obtain information about at least one application and setting information about at least one screen, corresponding to the at least one user interface.

According to an embodiment, the one or more programs may comprise instructions for the electronic device to change a setting of at least one screen based on the information about the at least one application and the setting information about the at least one screen.

According to an embodiment, the one or more programs may comprise instructions for the electronic device to, based on at least some of the at least one application being not installed on the electronic device, display a message for leading to install at least some of the at least one application.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (160);
memory (130);
a communication module (190); and
at least one processor (120) operatively connected to the display, the memory, and the communication module, wherein the at least one processor is configured to:
based on a plurality of applications stored in the memory, display a plurality of user interfaces corresponding to a screen setting applied to the electronic device;
receive a first user input for selecting at least one user interface among the plurality of user interfaces;
obtain each of pieces of setting information about at least one screen corresponding to the selected at least one user interface;
obtain a data file that groups at least one piece of application information corresponding to the selected at least one user interface and the obtained setting information about the at least one screen; and
transmit the data file to an external server (108).

2. The electronic device of claim 1, wherein the at least one processor is configured to:
display at least one image captured for a screen displayed on the display; and
display the plurality of user interfaces corresponding to a setting included in an image selected among the at least one image.

3. The electronic device of claim 1 or 2, wherein the at least one processor is configured to:
display an execution screen of one of the plurality of applications; and
based on receiving a second user input for sharing a setting of a screen through the execution screen of the one application, display the plurality of user interfaces corresponding to a setting of the execution screen of the one application.

4. The electronic device of any one of claims 1 to 3, wherein the at least one processor is configured to, based on receiving a third user input for executing an execution screen of a screen sharing application for sharing a setting of a screen, display the plurality of user interfaces corresponding to a setting of a shareable screen.

5. The electronic device of any one of claims 1 to 4, wherein a setting of the screen includes at least one of a background screen, a function, an arrangement, a shape, or a color of at least one object.

6. The electronic device of any one of claims 1 to 5, wherein setting information about the at least one screen includes at least one of data corresponding to the setting of the screen or a thumbnail image corresponding to the setting of the screen.

7. The electronic device of any one of claims 1 to 6, wherein the screen applied to the electronic device includes at least one of a home screen, a lock screen, a clock screen, a keyboard screen, a multi-window, a navigation bar, a notification screen, a stylus pen-related screen, a background screen, or an application execution screen.

8. The electronic device of any one of claims 1 to 7, wherein the at least one processor is configured to display at least one of a QR code or a URL for sharing the data file on the display after transmitting the data file to the external server.

9. An electronic device (104) comprising:
a display;
memory;
a communication module; and
at least one processor operatively connected to the display, the memory, and the communication module, wherein the at least one processor is configured to:
receive a data file including screen setting information shared from an external server (108);
display a plurality of user interfaces corresponding to setting information about a plurality of screens included in the data file;
based on receiving a user input for selecting at least one user interface among the plurality of user interfaces, obtain information about at least one application and setting information about at least one screen, corresponding to the at least one user interface; and
based on the information about the at least one application and the setting information about the at least one screen, modify a setting of at least one screen.

10. The electronic device of claim 9, wherein the at least one processor is configured to, based on at least some of the at least one application being not installed on the electronic device, display a message for guiding to install at least some of the at least one application.

11. A method for controlling an electronic device, the method comprising:
based on a plurality of applications stored in memory, displaying a plurality of user interfaces corresponding to a screen setting applied to the electronic device;
receiving a first user input for selecting at least one user interface among the plurality of user interfaces;
obtaining each of pieces of setting information about at least one screen corresponding to the selected at least one user interface;
obtaining a data file that groups at least one piece of application information corresponding to the selected at least one user interface and the obtained setting information about the at least one screen; and
transmitting the data file to an external server.

12. The method of claim 11, wherein displaying the plurality of user interfaces:
displays at least one image captured for a screen displayed on a display; and
displays the plurality of user interfaces corresponding to a setting included in an image selected among the at least one image.

13. The method of claim 11 or 12, wherein displaying the plurality of user interfaces:
displays an execution screen of one of the plurality of applications; and
based on receiving a second user input for sharing a setting of a screen through the execution screen of the one application, displays the plurality of user interfaces corresponding to a setting of the execution screen of the one application.

14. The method of any one of claims 11 to 13, wherein displaying the plurality of user interfaces, based on receiving a third user input for executing an execution screen of a screen sharing application for sharing a setting of a screen, displays the plurality of user interfaces corresponding to a setting of a shareable screen.

15. The method of any one of claims 11 to 14, wherein a setting of the screen includes at least one of a background screen, a function, an arrangement, a shape, or a color of at least one object.
